# EUROPEAN PATENT APPLICATION

(11) **EP 4 769 563 A1**
(43) Date of publication of application: **01.07.2026**
(21) Application number: 23955776.2
(22) Date of filing: 20.10.2023
(51) Int. Cl.: H01M 4/525, H01M 4/505, H01M 10/0525

(54) **ELECTROCHEMICAL DEVICE AND ELECTRONIC DEVICE**

(71) Applicant: Ningde Amperex Technology Limited, Ningde, Fujian 352100 (CN)
(72) Inventor: ZHOU, Juan, Ningde, Fujian 352100 (CN); ZHANG, Hui, Ningde, Fujian 352100 (CN); CHENG, Shiyang, Ningde, Fujian 352100 (CN); LI, Gaofeng, Ningde, Fujian 352100 (CN)
(74) Representative: Kraus & Lederer PartGmbB
(86) International application number: PCT/CN2023/125579
(87) International publication number: WO 2025/081452

(57) **Abstract**

Provided are an electrochemical device and an electronic device. The electrochemical device includes a positive electrode plate. The positive electrode plate includes a positive electrode active material layer, where the positive electrode active material layer includes a first positive electrode active material and a second positive electrode active material. The first positive electrode active material contains element Ni and element Mn, and the second positive electrode active material contains element Co. A relationship curve of a capacity-voltage differential dQ/dV with respect to voltage V during discharge of the electrochemical device includes a peak a located at 4.1 V to 4.3 V and a peak b located at 3.6 V to 4.0 V. This can achieve good cycling performance and safety performance of the electrochemical device while enhancing the energy density thereof.

## Description

### TECHNICAL FIELD

The present application relates to the field of electrochemical energy storage, and specifically to an electrochemical device and an electronic device.

### BACKGROUND

With the widespread application of portable electronic devices, electric tools, and the like, the market has imposed increasingly higher requirements on the overall performance of electrochemical devices (for example, lithium-ion batteries) therein, such as not only requiring the electrochemical device to have higher energy density to meet the demand for long endurance, but also requiring the electrochemical device to have longer cycle life and higher safety. Therefore, there is an urgent need to develop electrochemical devices with superior overall performance.

### SUMMARY

In view of this, the present application provides an electrochemical device and an electronic device to enhance the energy density of the electrochemical device while achieving good cycle life and safety.

According to a first aspect of the present application, an electrochemical device is provided, where the electrochemical device includes a positive electrode plate. The positive electrode plate includes a positive electrode active material layer, where the positive electrode active material layer includes a first positive electrode active material and a second positive electrode active material. The first positive electrode active material contains element Ni and element Mn, and the second positive electrode active material contains element Co. A relationship curve of a capacity-voltage differential dQ/dV with respect to voltage V during discharge of the electrochemical device includes a peak a located at 4.1 V to 4.3 V and a peak b located at 3.6 V to 4.0 V. In the electrochemical device of the present application, peak a is mainly determined by the first positive electrode active material, and peak b is mainly determined by the second positive electrode active material. The first positive electrode active material, relative to the second positive electrode active material, has a characteristic peak a in a high-voltage region during discharge of the electrochemical device, enabling the electrochemical device to have a higher reversible discharge capacity in the high-voltage region, thereby significantly enhancing the energy density of the electrochemical device. Meanwhile, due to the higher lithium deintercalation amount of the first positive electrode active material in the high-voltage region, the risk of excessive lithium deintercalation of the second positive electrode active material in the high-voltage region can be reduced, thereby improving the structural stability of the second positive electrode active material at high temperature and high voltage. Additionally, due to the presence of oxygen vacancies on the surface of the first positive electrode active material, oxygen release from its surface can be suppressed, enabling it to maintain high structural stability at high temperature and high voltage, thereby allowing the electrochemical device to achieve both good cycling performance and safety performance.

In some embodiments, a peak area of peak a is Sₐ, and a peak area of peak b is S_{b}, satisfying: 0.4 ≤ Sₐ/S_{b} ≤ 1. By regulating the relative content of the first positive electrode active material and the second positive electrode active material to make the area ratio Sₐ/S_{b} of the peak a to the peak b satisfy the above range, the energy density of the electrochemical device can be significantly enhanced while allowing the electrochemical device to have both excellent cycling performance and safety performance. Further, in some embodiments, 0.45 ≤ Sₐ/S_{b} ≤ 0.65.

In some embodiments, when the electrochemical device is in a fully discharged state, an X-ray diffraction characterization of the positive electrode plate shows two diffraction peaks in the range of 18° to 19.5°, sequentially from low angle to high angle as diffraction peak A and diffraction peak B, where a peak intensity of diffraction peak A is I_{A}, and a peak intensity of diffraction peak B is I_{B}, satisfying: 1.2 ≤ I_{B}/I_{A} ≤ 5. The diffraction peak A corresponds to the first positive electrode active material, and the diffraction peak B corresponds to the second positive electrode active material. When I_{B}/I_{A} satisfies the above range, the energy density of the electrochemical device can be significantly enhanced while allowing the electrochemical device to have both excellent cycling performance and safety performance. Further, in some embodiments, 2 ≤ I_{B}/I_{A} ≤ 5.

In some embodiments, the first positive electrode active material includes a lithium nickel manganese composite oxide, and the second positive electrode active material includes a lithium cobalt composite oxide.

In some embodiments, the first positive electrode active material is secondary particles formed by aggregation of primary particles.

In some embodiments, an average diameter of the first positive electrode active material is 6 µm to 14 µm.

In some embodiments, the second positive electrode active material is primary particles.

In some embodiments, an average diameter of the second positive electrode active material is 10 µm to 25 µm.

In some embodiments, in a cross-section along a thickness direction of the positive electrode active material layer, in a 127 µm × 34 µm region, an area of the first positive electrode active material is S₁, and an area of the second positive electrode active material is S₂, satisfying: 1 ≤ S₂/S₁ ≤ 7. When S₂/S₁ satisfies the above range, the energy density of the electrochemical device can be significantly enhanced while allowing the electrochemical device to have both excellent cycling performance and safety performance. Further, in some embodiments, 3.4 ≤ S₂/S₁ ≤ 6.8.

In some embodiments, the first positive electrode active material further contains element M1, where M1 includes at least one of Na or K. Based on metal elements in the first positive electrode active material excluding element Li and the element M1, a molar percentage of the element Ni in the first positive electrode active material is a1, a molar percentage of the element Mn is b1, and a molar percentage of the element M1 is c1, satisfying: 30% ≤ a1 ≤ 70%, 30% ≤ b1 ≤ 70%, and 0.1% ≤ c1 ≤ 15%. The doping of the element M1 enables the first positive electrode active material to have good structural stability at high temperature and high voltage, thereby improving the cycling performance and safety performance of the electrochemical device.

In some embodiments, the first positive electrode active material includes a matrix and a coating layer located on a surface of the matrix, where the coating layer contains element B. The coating layer with a boron-containing compound can, on one hand, neutralize free lithium on the surface of the matrix, and on the other hand, eliminate HF produced by lithium salt decomposition or other side reactions in the electrochemical device, reducing corrosion of the electrode material and current collector by HF, thereby improving the cycling performance and high-temperature storage performance of the electrochemical device.

In some embodiments, the coating layer contains a B-containing oxide.

In some embodiments, based on metal elements in the first positive electrode active material excluding element Li and element M1, a molar percentage of the element B in the first positive electrode active material is d1, satisfying: 0.5% ≤ d1 ≤ 10%.

In some embodiments, the first positive electrode active material has a layered crystal structure belonging to the R-3m space group. In some embodiments, the first positive electrode active material includes Liₓ₁M1ₘNi_{y1}Mn_{z1}BₖR1_{q1}O_{2±n1}T1ₙ₁, where 0.6 ≤ x1 ≤ 1.2, 0.001 ≤ m ≤ 0.15, 0.3 ≤ y1 ≤ 0.7, 0.3 ≤ z1 ≤ 0.7, 0 ≤ k ≤ 0.1, 0 ≤ q1 ≤ 0.2, 0 ≤ n1 ≤ 0.2, element M1 includes at least one of Na or K, element R1 includes at least one of Co, Ca, Sr, Y, Zr, Nb, Mo, In, Sn, Sb, Ba, La, Ce, Hf, Ta, W, Pb, Al, Mg, Si, P, S, Ti, V, Cr, Fe, Cu, Zn, Ga, or Ge, and element T1 includes at least one of F, Cl, Br, I, or N.

In some embodiments, based on metal elements in the second positive electrode active material excluding element Li, a molar percentage of the element Co in the second positive electrode active material is a2, satisfying: 80% ≤ a2 ≤ 100%.

In some embodiments, the second positive electrode active material further contains element M2, where M2 includes at least one of Ni, Mn, Al, Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge. Based on metal elements in the second positive electrode active material excluding element Li, a molar percentage of the element M2 in the second positive electrode active material is b2, satisfying: 0.1% ≤ b2 ≤ 20%.

In some embodiments, the second positive electrode active material has a layered crystal structure belonging to the R-3m space group. In some embodiments, the second positive electrode active material includes Liₓ₂CO_{y2}M2_{z2}O_{2±n2}T2ₙ₂, where 0.6 ≤ x2 ≤ 1.2, 0.8 ≤ y2 ≤ 1, 0 ≤ z2 ≤ 0.2, 0 ≤ n2 ≤ 0.2, element M2 includes at least one of Ni, Mn, Al, Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge, and element T2 includes at least one of F, Cl, Br, I, or N.

According to a second aspect of the present application, an electronic device is provided, including the electrochemical device described above.

### BRIEF DESCRIPTION OF DRAWINGS

To more clearly illustrate the technical solutions in the embodiments of the present application, the drawings required for describing the embodiments are briefly introduced below. Obviously, the drawings described below are only some embodiments of the present application, and other embodiments can be obtained by those of ordinary skill in the art based on these drawings.

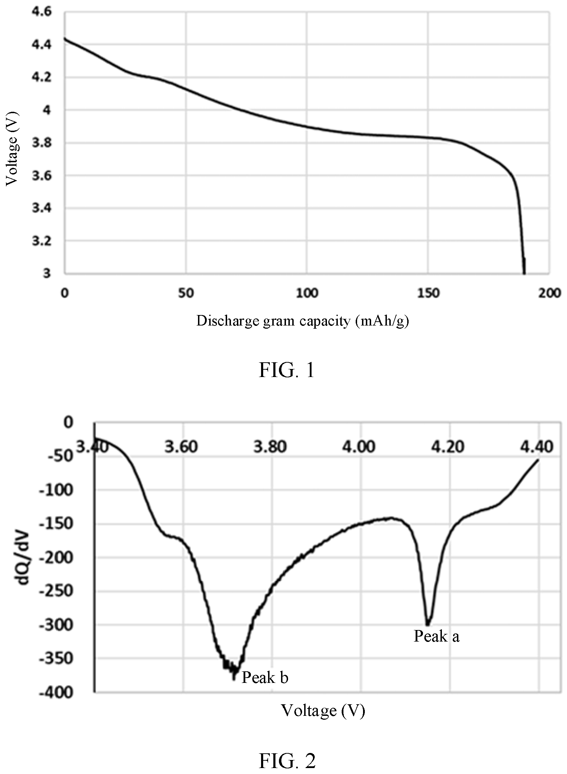

FIG. 1 is a discharge curve of an electrochemical device of Example 1 of the present application.
FIG. 2 is a relationship curve of a capacity-voltage differential dQ/dV with respect to voltage V during discharge of the electrochemical device of Example 1 of the present application.

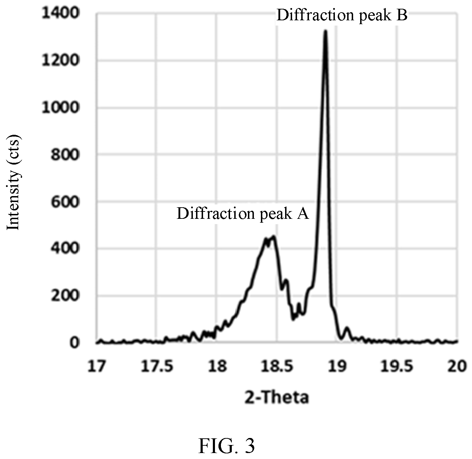

FIG. 3 is an X-ray diffraction (XRD) pattern of a positive electrode plate in a fully discharged state of the electrochemical device of Example 1 of the present application.

### DETAILED DESCRIPTION OF EMBODIMENTS

The technical solutions in the embodiments of the present application will be clearly and completely described below in conjunction with the drawings in the embodiments of the present application. Obviously, the described embodiments are only a part of the embodiments of the present application, not all embodiments.

According to a first aspect of the present application, an electrochemical device is provided, where the electrochemical device includes a positive electrode plate. The positive electrode plate includes a positive electrode active material layer. The positive electrode active material layer includes a first positive electrode active material and a second positive electrode active material. The first positive electrode active material contains element Ni and element Mn, and the second positive electrode active material contains element Co. A relationship curve of a capacity-voltage differential dQ/dV with respect to voltage V during discharge of the electrochemical device includes a peak a located at 4.1 V to 4.3 V and a peak b located at 3.6 V to 4.0 V. The peak a is mainly determined by the first positive electrode active material, and the peak b is mainly determined by the second positive electrode active material. The first positive electrode active material, relative to the second positive electrode active material, has a characteristic peak a in the high-voltage region during discharge of the electrochemical device, enabling the electrochemical device to have a higher reversible discharge capacity in a high-voltage region, thereby significantly enhancing the energy density of the electrochemical device. Meanwhile, due to a higher lithium deintercalation amount of the first positive electrode active material in the high-voltage region, the risk of excessive lithium deintercalation of the second positive electrode active material in the high-voltage region can be reduced, thereby improving the structural stability of the second positive electrode active material at high temperature and high voltage. Additionally, due to the presence of oxygen vacancies on the surface of the first positive electrode active material, oxygen release from its surface can be suppressed, enabling it to maintain high structural stability at high temperature and high voltage, thereby allowing the electrochemical device to achieve both good cycling performance and safety performance.

In some embodiments, a peak area of peak a is Sₐ, and a peak area of peak b is S_{b}, satisfying: 0.4 ≤ Sₐ/S_{b} ≤ 1. Sₐ/S_{b} can be used to indirectly characterize the mixing ratio of the first positive electrode active material and the second positive electrode active material. By regulating the relative content of the first positive electrode active material and the second positive electrode active material to make the area ratio Sₐ/S_{b} of peak a to peak b satisfy the above range, the energy density of the electrochemical device can be significantly enhanced while allowing the electrochemical device to have both excellent cycling performance and safety performance. Optionally, Sₐ/S_{b} is 0.4, 0.45, 0.5, 0.55, 0.6, 0.65, 0.7, 0.75, 0.8, 0.85, 0.9, 0.95, 1, or a range composed of any two of the above. Further, in some embodiments, 0.45 ≤ Sₐ/S_{b} ≤ 0.65.

In some embodiments, when the electrochemical device is in a fully discharged state, an X-ray diffraction characterization of the positive electrode plate shows two diffraction peaks in the range of 18° to 19.5°, sequentially from low angle to high angle as diffraction peak A and diffraction peak B, where a peak intensity of the diffraction peak A is I_{A}, and a peak intensity of the diffraction peak B is I_{B}, satisfying: 1.2 ≤ I_{B}/I_{A} ≤ 5. The diffraction peak A corresponds to the first positive electrode active material, and the diffraction peak B corresponds to the second positive electrode active material. When I_{B}/I_{A} satisfies the above range, the energy density of the electrochemical device can be significantly enhanced while allowing the electrochemical device to have both excellent cycling performance and safety performance. Further, in some embodiments, 2 ≤ I_{B}/I_{A} ≤ 5. In this case, the cycling performance and safety performance of the electrochemical device are better.

In some embodiments, the first positive electrode active material includes a lithium nickel manganese composite oxide, and the second positive electrode active material includes a lithium cobalt composite oxide.

In some embodiments, the first positive electrode active material is secondary particles formed by aggregation of primary particles. This can enhance the kinetic performance of the electrochemical device.

In some embodiments, an average diameter of the first positive electrode active material is 6 µm to 14 µm.

In some embodiments, the second positive electrode active material is primary particles.

In some embodiments, an average diameter of the second positive electrode active material is 10 µm to 25 µm.

In some embodiments, in a cross-section along a thickness direction of the positive electrode active material layer, in a 127 µm × 34 µm region, an area of the first positive electrode active material is S₁, and an area of the second positive electrode active material is S₂, satisfying: 1 ≤ S₂/S₁ ≤ 7. When S₂/S₁ satisfies the above range, the energy density of the electrochemical device can be significantly enhanced while allowing the electrochemical device to have both excellent cycling performance and safety performance. Optionally, S₂/S₁ is 1, 1.5, 2, 2.5, 3, 3.5, 4, 4.5, 5, 5.5, 6, 6.5, 7, or a range composed of any two of the above. Further, in some embodiments, 3.4 ≤ S₂/S₁ ≤ 6.8. In this case, the cycling performance and safety performance of the electrochemical device are better.

In some embodiments, the first positive electrode active material further contains element M1, where M1 includes at least one of Na or K. The doping of the element M1 enables the first positive electrode active material to have good structural stability at high temperature and high voltage, thereby improving the cycling performance and safety performance of the electrochemical device. In some embodiments, based on metal elements in the first positive electrode active material excluding element Li and the element M1, a molar percentage of the element Ni in the first positive electrode active material is a1, and a molar percentage of the element Mn is b1, a molar percentage of the element M1 is c1, satisfying: 30% ≤ a1 ≤ 70%, 30% ≤ b1 ≤ 70%, and 0.1% ≤ c1 ≤ 15%.

In some embodiments, the first positive electrode active material includes a matrix and a coating layer located on a surface of the matrix, where the coating layer contains element B. The coating layer with a boron-containing compound can, on one hand, neutralize free lithium on the surface of the matrix, and on the other hand, eliminate HF produced by lithium salt decomposition or other side reactions in the electrochemical device, reducing corrosion of the electrode material and current collector by HF, thereby improving the cycling performance and high-temperature storage performance of the electrochemical device.

In some embodiments, the coating layer contains a B-containing oxide.

In some embodiments, based on metal elements in the first positive electrode active material excluding element Li and element M1, a molar percentage of the element B in the first positive electrode active material is d1, satisfying: 0.5% ≤ d1 ≤ 10%. Optionally, d1 is 0.5%, 1%, 1.5%, 2%, 2.5%, 3%, 3.5%, 4%, 4.5%, 5%, 5.5%, 6%, 6.5%, 7%, 8%, 9%, 10%, or a range composed of any two of the above. Further, in some embodiments, 1.5% ≤ d1 ≤ 7%.

In some embodiments, the first positive electrode active material has a layered crystal structure belonging to the R-3m space group. In some embodiments, the first positive electrode active material includes Liₓ₁M1ₘNi_{y1}Mn_{z1}BₖR1_{q1}O_{2±n1}T1ₙ₁, where 0.6 ≤ x1 ≤ 1.2, 0.001 ≤ m ≤ 0.15, 0.3 ≤ y1 ≤ 0.7, 0.3 ≤ z1 ≤ 0.7, 0 ≤ k ≤ 0.1, 0 ≤ q1 ≤ 0.2, 0 ≤ n1 ≤ 0.2, element M1 includes at least one of Na or K, element R1 includes at least one of Co, Ca, Sr, Y, Zr, Nb, Mo, In, Sn, Sb, Ba, La, Ce, Hf, Ta, W, Pb, Al, Mg, Si, P, S, Ti, V, Cr, Fe, Cu, Zn, Ga, or Ge, and element T1 includes at least one of F, Cl, Br, I, or N.

In some embodiments, based on metal elements in the second positive electrode active material excluding element Li, a molar percentage of the element Co in the second positive electrode active material is a2, satisfying: 80% ≤ a2 ≤ 100%.

In some embodiments, the second positive electrode active material further contains element M2, where M2 includes at least one of Ni, Mn, Al, Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge. Based on metal elements in the second positive electrode active material excluding element Li, a molar percentage of the element M2 in the second positive electrode active material is b2, satisfying: 0.1% ≤ b2 ≤ 20%.

In some embodiments, the second positive electrode active material has a layered crystal structure belonging to an R-3m space group. In some embodiments, the second positive electrode active material includes Liₓ₂Co_{y2}M2_{z2}O_{2±n2}T2ₙ₂, where 0.6 ≤ x2 ≤ 1.2, 0.8 ≤ y2 ≤ 1, 0 ≤ z2 ≤ 0.2, 0 ≤ n2 ≤ 0.2, element M2 includes at least one of Ni, Mn, Al, Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge, and element T2 includes at least one of F, Cl, Br, I, or N.

In some embodiments, the positive electrode plate may further include a positive electrode current collector, and in this case, the positive electrode active material layer may be located on one side or two sides of the positive electrode current collector. In some embodiments, the positive electrode current collector may include aluminum foil, and certainly, other positive electrode current collectors commonly used in the art may also be used. In some embodiments, a thickness of the positive electrode current collector is 7 µm to 20 µm.

In some embodiments, the positive electrode active material layer may further include a conductive agent and a binder. In some embodiments, the conductive agent includes at least one of acetylene black, carbon black, Ketjen black, carbon nanotubes, graphene, or carbon nanofibers. In some embodiments, the binder may include at least one of polyvinylidene fluoride, a copolymer of vinylidene fluoride-hexafluoropropylene, styrene-acrylate copolymer, polyamide, polyacrylonitrile, acrylate polymer, polyacrylic acid, polyacrylate, sodium carboxymethyl cellulose, polyvinyl acetate, polyvinylpyrrolidone, polyvinyl ether, polytetrafluoroethylene, or polyhexafluoropropylene. In some embodiments, a mass ratio of the positive electrode active material, the conductive agent, and the binder in the positive electrode active material layer is (90-99):(0.1-10):(0.1-10), but this is only an example, and any other suitable mass ratio may be used.

In some embodiments, the electrochemical device further includes a negative electrode plate and a separator, where the positive electrode plate and the negative electrode plate are separated by the separator disposed therebetween. In some embodiments, the negative electrode plate includes a negative electrode current collector and a negative electrode active material layer. In some embodiments, the negative electrode active material layer may be disposed on one side or two sides of the negative electrode current collector.

In some embodiments, the negative electrode active material layer may include a negative electrode active material, a binder, and an optional conductive agent. In some embodiments, the negative electrode active material may include at least one of a carbon material or a silicon-based material. In some embodiments, the carbon material includes at least one of graphite, hard carbon, soft carbon, or mesocarbon microbeads. In some embodiments, the silicon-based material includes at least one of silicon, silicon-oxygen material, silicon-carbon material, or silicon-oxygen-carbon material.

In some embodiments, the binder in the negative electrode active material layer may include at least one of sodium carboxymethyl cellulose (CMC), polyacrylic acid, polyacrylate, polyvinylpyrrolidone, polyimide, polysiloxane, styrene-butadiene rubber, polyurethane resin, or acrylate polymer. In some embodiments, the conductive agent in the negative electrode active material layer may include at least one of conductive carbon black, acetylene black, Ketjen black, carbon nanotubes, graphene, or carbon nanofibers. In some embodiments, a mass ratio of the negative electrode active material, the conductive agent, and the binder in the negative electrode active material layer may be (78 to 98.5):(0.1 to 10):(0.1 to 10). It should be understood that the above is only an example, and any other suitable materials and mass ratios may be used. In some embodiments, the negative electrode current collector may include at least one of copper foil, nickel foil, or a carbon-based current collector.

In some embodiments, the separator includes a porous substrate layer and a heat-resistant layer, where the heat-resistant layer is located on a surface of the porous substrate layer. In some embodiments, the porous substrate layer includes at least one of polyethylene, polypropylene, polyethylene terephthalate, polyimide, or aramid. In some embodiments, a thickness of the separator is in a range of 3 µm to 20 µm. In some embodiments, pores of the porous substrate layer have a diameter in a range of 0.01 µm to 1 µm.

In some embodiments, the heat-resistant layer includes inorganic particles and a binder, where the inorganic particles are selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. The binder of the heat-resistant layer is selected from at least one of polyvinylidene fluoride, a copolymer of vinylidene fluoride-hexafluoropropylene, polyamide, polyacrylonitrile, acrylate polymer, polyacrylic acid, polyacrylate, sodium carboxymethyl cellulose, polyvinylpyrrolidone, polyvinyl ether, polytetrafluoroethylene, or polyhexafluoropropylene.

In some embodiments, the separator further includes an adhesive layer, where the adhesive layer is located on a surface of the porous substrate layer and/or the heat-resistant layer. In some embodiments, the adhesive layer includes at least one of polyvinylidene fluoride, a copolymer of vinylidene fluoride-hexafluoropropylene, polyamide, polyacrylonitrile, acrylate polymer, polyacrylic acid, polyacrylate, sodium carboxymethyl cellulose, polyvinylpyrrolidone, polyvinyl ether, polytetrafluoroethylene, or polyhexafluoropropylene.

In some embodiments, the electrochemical device includes a lithium-ion battery, but the present application is not limited thereto.

In some embodiments, the electrochemical device further includes an electrolyte, where the electrolyte includes a lithium salt and a non-aqueous solvent. In some embodiments, the lithium salt includes lithium hexafluorophosphate. In some embodiments, a concentration of the lithium salt is 1 mol/L to 2 mol/L. In some embodiments, the non-aqueous solvent may be a carbonate compound, a carboxylate compound, an ether compound, or a combination thereof.

In some embodiments, the carbonate compound may be a linear carbonate compound, a cyclic carbonate compound, or a combination thereof. Examples of the linear carbonate compound include diethyl carbonate (DEC), dimethyl carbonate (DMC), dipropyl carbonate (DPC), methyl propyl carbonate (MPC), ethyl propyl carbonate (EPC), methyl ethyl carbonate (MEC), and combinations thereof. Examples of the cyclic carbonate compound include ethylene carbonate (EC), propylene carbonate (PC), butylene carbonate (BC), or combinations thereof. Examples of the carboxylate compound include methyl acetate, ethyl acetate, n-propyl acetate, tert-butyl acetate, methyl propionate, ethyl propionate, propyl propionate, γ-butyrolactone, decalactone, valerolactone, caprolactone, methyl formate, or combinations thereof. Examples of the ether compound include dibutyl ether, tetraglyme, diglyme, 1,2-dimethoxyethane, 1,2-diethoxyethane, ethoxymethoxyethane, 2-methyltetrahydrofuran, tetrahydrofuran, or combinations thereof.

According to a second aspect of the present application, an electronic device is provided, including the electrochemical device described above. The electronic device of the embodiments of the present application is not particularly limited and may be any electronic device known in the prior art. In some embodiments, the electronic device may include, but is not limited to, a notebook computer, a pen-input computer, a mobile computer, an e-book reader, a portable phone, a portable fax machine, a portable copier, a portable printer, a headset stereo, a video recorder, an LCD television, a portable cleaner, a portable CD player, a mini disc player, a transceiver, an electronic organizer, a calculator, a memory card, a portable recorder, a radio, a backup power source, a motor, an automobile, a motorcycle, an electric bicycle, a bicycle, a drone, a lighting appliance, a toy, a gaming console, a clock, a power tool, a flashlight, a camera, a large household battery, or a lithium-ion capacitor.

Taking a lithium-ion battery as an example, some specific examples and comparative examples are listed below to better describe the present application.

### Example 1

Preparation of negative electrode plate: Artificial graphite, styrene-butadiene rubber, and sodium carboxymethyl cellulose were mixed at a mass ratio of 96:2:2 and dispersed in deionized water to prepare a negative electrode slurry with a solid content of 0.8. After being stirred to uniformity, the negative electrode slurry was evenly applied on one side surface of a negative electrode current collector copper foil and dried at 80°C to obtain a negative electrode plate coated with a negative electrode active material layer on one surface. The above steps were repeated on the other side surface of the copper foil to obtain a negative electrode plate coated with negative electrode active material layers on two surfaces. After cold pressing, slitting, and welding tabs, the negative electrode plate was obtained.

Preparation of positive electrode plate: A positive electrode active material (including a first positive electrode active material and a second positive electrode active material, with a mixing mass ratio as shown in Table 1), conductive carbon black, carbon nanotubes, and polyvinylidene fluoride were mixed at a mass ratio of 93.7:2.8:1.2:2.3 and dispersed in N-methylpyrrolidone to prepare a positive electrode slurry with a solid content of 0.7. After thorough stirring and mixing uniformly, the positive electrode slurry was evenly applied on one side surface of a positive electrode current collector aluminum foil and dried at 85°C to obtain a positive electrode plate coated with a positive electrode active material layer on one surface. The above steps were repeated on the other side surface of the aluminum foil to obtain a positive electrode plate coated with positive electrode active material layers on two surfaces. After cold pressing, slitting, and welding tabs, the positive electrode plate was obtained.

The preparation steps of the first positive electrode active material are as follows:
(1). A mixed solution containing NiSO₄ and MnSO₄ was prepared according to an elemental molar ratio of Ni:Mn = 50:50, and reacted with a precipitant (NaOH solution) and a complexing agent (ammonia water), with a reaction time of 60 hours, an ammonia water concentration of 1 mol/L, and a pH value of 12.2 to obtain a nickel-manganese precursor TM(OH)₂ (TM = Ni/Mn) with an average particle size Dᵥ50 of 11 µm.
(2). The above nickel-manganese precursor and sodium carbonate were ground and mixed uniformly at a molar ratio of Na:(Ni+Mn) = 1.05:1. The mixture was calcined at 800°C in an air atmosphere for 20 h, followed by crushing, sieving, and demagnetization to obtain product one.
(3). Product one was mixed with a mixture of lithium hydroxide and lithium nitrate (with a molar ratio of 1:1), where the mass ratio of the mixture of lithium hydroxide and lithium nitrate to product one was 10:1. The temperature was raised to 400°C at a speed of 10°C/min, held for 6 hours, and then quenched to room temperature at a temperature drop speed of 50°C/min in a mixed gas of Ar and air (with a volume ratio of Ar to air = 1:2) to obtain product two.
(4). Product two was washed and soaked in deionized water and dried.
(5). After crushing and sieving, the first positive electrode active material was obtained, with a Na/(Ni+Mn) molar ratio of 10.7% and Dᵥ50 of 9.4 µm.

The second positive electrode active material used lithium cobalt oxide with a Dᵥ50 of 21.7 µm.

Preparation of separator: An 8 µm thick porous polyethylene (PE) film was used as the separator.

Preparation of electrolyte: In an argon atmosphere glove box with a water content of less than 10 ppm, lithium hexafluorophosphate was mixed uniformly with a non-aqueous organic solvent (ethylene carbonate (EC):propylene carbonate (PC):diethyl carbonate (DEC):propyl propionate (PP):ethyl propionate (EP) = 1:1:1:1:1, by weight) to prepare an electrolyte, where the mass percentage of lithium hexafluorophosphate in the electrolyte was 12.5%.

Preparation of lithium-ion battery: The positive electrode plate, separator, and negative electrode plate were stacked in sequence, with the separator positioned between the positive electrode plate and the negative electrode plate for separation, and wound to obtain an electrode assembly. The electrode assembly was placed in an aluminum-plastic film outer packaging, dehydrated at 80°C, injected with the above electrolyte, and sealed. After formation, degassing, shaping, and other processes, a lithium-ion battery was obtained.

Examples 2 to 9 differed from Example 1 in that the composition of the positive electrode active material was adjusted according to the mass mixing ratio of the first positive electrode active material and the second positive electrode active material as shown in Table 1.

Comparative Example 1 differed from Example 1 in that the positive electrode active material only used the first positive electrode active material.

Comparative Example 2 differed from Example 1 in that the positive electrode active material only used the second positive electrode active material.

Comparative Example 3 differed from Example 1 in that the first positive electrode active material used LiNi_{0.92}Co_{0.06}Mn_{0.02}O₂ secondary particles with a Dᵥ50 of 12.9 µm, where the average diameter of the primary particles was 0.6 µm.

Examples 10 to 15 differed from Example 1 in that the first positive electrode active material was prepared according to the following method, with B coating applied to the first positive electrode active material.
(1). A mixed solution containing NiSO₄ and MnSO₄ was prepared according to an elemental molar ratio of Ni:Mn = 50:50, and reacted with a precipitant (NaOH solution) and a complexing agent (ammonia water), with a reaction time of 60 hours, an ammonia water concentration of 1 mol/L, and a pH value of 12.2 to obtain a nickel-manganese precursor TM(OH)₂ (TM = Ni/Mn) with an average particle size Dᵥ50 of 11 µm.
(2). The above nickel-manganese precursor and sodium carbonate were ground and mixed uniformly at a molar ratio of Na:(Ni+Mn) = 1.05:1. The mixture was calcined at 800°C in an air atmosphere for 20 h, followed by crushing, sieving, and demagnetization to obtain product one.
(3). Product one was mixed with a mixture of lithium hydroxide and lithium nitrate (with a molar ratio of 1:1), where the mass ratio of the mixture of lithium hydroxide and lithium nitrate to product one was 10:1. The temperature was raised to 400°C at a speed of 10°C/min, held for 6 h, and then quenched to room temperature at a temperature drop speed of 50°C/min in a mixed gas of Ar and air (with a volume ratio of Ar to air = 1:2) to obtain product two.
(4). Product two was washed and soaked in deionized water, dried, crushed, and sieved to obtain product three.
(5). Product three was ground and mixed uniformly with boric acid according to the d1 ratio shown in Table 2, and calcined at 200°C in an air atmosphere for 12 h to obtain the first positive electrode active material.

In addition, in the present application, the following methods were used to measure the corresponding parameters.

### (1). Peak area:

Within a voltage range of 3 V to 4.45 V, the lithium-ion battery was charged and discharged at a current of 0.1 C to obtain a relationship curve of a capacity-voltage differential dQ/dV with respect to voltage V during discharge. The peak areas of peak a and peak b in the curve were obtained by integration.

### (2). Particle morphology, average diameter, and area ratio S₂/S₁:

The positive electrode plate was cut longitudinally using ion polishing, and the morphology of the positive electrode active material particles in the cross-section of the positive electrode plate was observed using a scanning electron microscope (instrument model: ZEISS SEM, acceleration voltage: 0.1 kV to 30 kV). In the cross-sectional photo, 50 particles of the first or second positive electrode active material were randomly selected, and the average of their longest diameters was taken as the average diameter of the first or second positive electrode active material.

In the cross-sectional photo, a 127 µm × 34 µm region was randomly selected, and image software was used to calculate the area of the first positive electrode active material as S₁ and the area of the second positive electrode active material as S₂, thereby calculating the area ratio S₂/S₁.

### (3). Elemental content:

For the initial positive electrode active material, a mixed solvent was used to dissolve the first and second positive electrode active materials separately (for example, 0.4 g of positive electrode active material was dissolved in a mixture solvent of 10 ml aqua regia (nitric acid and hydrochloric acid mixed at 1:1 in volume) and 2 ml HF), and diluted to 100 mL, and the content of each element in the solution was tested using an ICP analyzer.

For the first positive electrode active material and second positive electrode active material in the positive electrode plate, the positive electrode plate was cut longitudinally using ion polishing, and the cross-section of the positive electrode plate was observed using a scanning electron microscope (instrument model: ZEISS SEM). An energy dispersive spectrometer (EDS) was used to test the first and second positive electrode active materials, respectively so as to determine the elemental content of the first positive electrode active material and second positive electrode active material.

### (4). X-ray diffraction:

The lithium-ion battery was fully discharged, and disassembled to obtain the positive electrode plate. X-ray diffraction analysis was performed on the positive electrode plate using an X-ray diffractometer (instrument model: Bruker D8 ADVANCE, target: Cu Kα, scanning angle: 5-80°).

### (5). Discharge gram capacity test:

The lithium-ion battery was tested at a constant temperature of 25°C. It was first charged at a constant current of 0.5 C until 4.45 V, then charged at a constant voltage of 4.45 V until the current reached 0.05 C, and then discharged at a constant current of 0.2 C until 3 V. Discharge gram capacity = first discharge capacity at 0.2 C/mass of positive electrode active material.

### (6). Cycling performance test:

First, in a 45°C environment, the battery was subjected to the first charge and discharge cycle. The battery was charged at a constant current of 0.5 C until 4.45 V, then charged at a constant voltage of 4.45 V until the current reached 0.05 C, and then discharged at a constant current of 0.5 C until 3 V. The above charge-discharge cycle was repeated, and the discharge capacities of the 3rd cycle and the 500th cycle were recorded.

Capacity retention rate at 45°C = (discharge capacity of the 500th cycle/discharge capacity of 3rd cycle) × 100%.

### (7). High-temperature storage performance test:

First, at 25°C, the lithium-ion battery was charged at a constant current of 0.5 C until 4.45 V, and then charged at a constant voltage of 4.45 V until the current reached 0.05 C. The thickness of the lithium-ion battery was measured with a micrometer, and the thickness of the lithium-ion battery was defined as the initial thickness H0 of the lithium-ion battery. The lithium-ion battery was then stored in a constant temperature oven at 85°C for 24 h, and the thickness of the lithium-ion battery was measured using the same method. The thickness of the lithium-ion battery after storage was defined as H1.

Thickness swelling rate at 85°C = (H1 - H0) / H0 × 100%.

Table 1 shows the parameters and evaluation results of Examples 1 to 9 and Comparative Examples 1 to 3.

**Table 1**

| | Mass mixing ratio of first and second positive electrode active materials | Voltage at peak b | Voltage at peak a | Sₐ/S_{b} | I_{B}/I_{A} | S₂/S₁ | Discharge gram capacity (mAh/g) | Capacity retention rate at 45°C after 500 cycles | Thickness swelling rate at 85°C after 24h storage |
|---|---|---|---|---|---|---|---|---|---|
| Example 1 | 2:8 | 3.72 | 4.15 | 0.61 | 2.99 | 4.71 | 187.5 | 82.9% | 12.7% |
| Example 2 | 0.2:9.8 | 3.71 | 4.15 | 0.49 | 4.87 | 6.72 | 182.1 | 85.8% | 10.9% |
| Example 3 | 0.5:9.5 | 3.71 | 4.15 | 0.53 | 4.61 | 6.48 | 183.1 | 85.2% | 11.3% |
| Example 4 | 1:9 | 3.71 | 4.15 | 0.57 | 3.97 | 5.81 | 185.0 | 84.5% | 12.1% |
| Example 5 | 1.5:8.5 | 3.72 | 4.15 | 0.59 | 3.41 | 5.16 | 186.7 | 84.6% | 12.3% |
| Example 6 | 2.5:7.5 | 3.72 | 4.15 | 0.63 | 2.52 | 4.13 | 189.2 | 81.3% | 14.1% |
| Example 7 | 3:7 | 3.72 | 4.16 | 0.65 | 2.08 | 3.42 | 191.4 | 79.9% | 15.1% |
| Example 8 | 4:6 | 3.73 | 4.16 | 0.7 | 1.67 | 2.24 | 193.5 | 79.1% | 16.0% |
| Example 9 | 5:5 | 3.73 | 4.16 | 0.74 | 1.29 | 1.18 | 195.6 | 78.4% | 17.8% |
| Comparative Example 1 | / | / | 4.17 | / | / | / | 204.5 | 76.9% | 21.2% |
| Comparative Example 2 | / | 3.71 | / | / | / | / | 181.7 | 86.2% | 10.4% |
| Comparative Example 3 | 2:8 | 3.71 | 4.09 | 0.54 | 4.52 | 4.48 | 188.9 | 77.6% | 16.2% |

By comparing Examples 1 to 9 with Comparative Example 2, it can be seen that as compared with Comparative Example 2, which does not use the first positive electrode active material, the discharge gram capacity of the lithium-ion batteries in Examples 1 to 9 is improved.

By comparing Examples 1 to 9 with Comparative Example 1, it can be seen that as compared with Comparative Example 1, which does not use the second positive electrode active material, the high-temperature cycling capacity retention rate and high-temperature thickness swelling rate of the lithium-ion batteries in Examples 1 to 9 are significantly improved.

By comparing Example 1 with Comparative Example 3, it can be seen that as compared with a mixed system of conventional high-nickel ternary material and lithium cobaltate, the mixed system of the first positive electrode active material and lithium cobaltate in the present application can significantly improve the high-temperature cycling performance and high-temperature storage performance of the lithium-ion battery while significantly enhancing the discharge gram capacity.

In addition, from Examples 1 to 9, it can be seen that when 0.4 ≤ Sₐ/S_{b} ≤ 1, 1.2 ≤ I_{B}/I_{A} ≤ 5, or 1 ≤ S₂/S₁ ≤ 7, the lithium-ion battery can achieve a high discharge gram capacity while maintaining good cycling capacity retention rate and low thickness swelling rate. When 0.45 ≤ Sₐ/S_{b} ≤ 0.65, 2 ≤ I_{B}/I_{A} ≤ 5, or 3.4 ≤ S₂/S₁ ≤ 6.8, the high-temperature cycling performance and high-temperature storage performance of the lithium-ion battery are better.

Table 2 shows the parameters and evaluation results of Example 1 and Examples 10 to 15.

**Table 2**

| | c1 | d1 | Discharge gram capacity (mAh/g) | Capacity retention rate at 45°C after 500 cycles | Thickness swelling rate at 85°C after 24h storage |
|---|---|---|---|---|---|
| Example 1 | 0.107 | / | 187.5 | 82.9% | 12.7% |
| Example 10 | 0.107 | 0.008 | 187.3 | 84.3% | 11.5% |
| Example 11 | 0.107 | 0.017 | 186.4 | 85.1% | 10.6% |
| Example 12 | 0.107 | 0.028 | 185.8 | 85.9% | 10.1% |
| Example 13 | 0.107 | 0.033 | 184.8 | 87.9% | 9.5% |
| Example 14 | 0.107 | 0.051 | 183.9 | 87.1% | 9.3% |
| Example 15 | 0.107 | 0.069 | 183.7 | 86.6% | 8.8% |

By comparing Example 1 with Examples 10 to 15, it can be seen that by applying B coating to the first positive electrode active material, the high-temperature cycling capacity retention rate of the lithium-ion battery is significantly improved, and the high-temperature storage thickness swelling rate is significantly reduced. It can be seen that applying B coating to the first positive electrode active material can significantly enhance the high-temperature cycling performance and safety performance of the lithium-ion battery. The possible reason is that the surface of the first positive electrode active material is coated with a boron-containing compound. The boron-containing compound, on one hand, neutralizes free lithium on the material surface, and on the other hand, can eliminate HF produced by lithium salt decomposition and other side reactions in the battery, thereby improving the high-temperature cycling performance and high-temperature storage performance of the battery.

The above are only preferred embodiments of the present application and are not intended to limit the protection scope of the present application. Any modifications, equivalent substitutions, improvements, and the like made within the spirit and principles of the present application are included in the protection scope of the present application.

## Claims

1. An electrochemical device, **characterized in that**, comprising a positive electrode plate, wherein the positive electrode plate comprises a positive electrode active material layer, the positive electrode active material layer comprises a first positive electrode active material and a second positive electrode active material, the first positive electrode active material contains element Ni and element Mn, and the second positive electrode active material contains element Co; wherein
a relationship curve of a capacity-voltage differential dQ/dV with respect to voltage V during discharge of the electrochemical device comprises a peak a located at 4.1 V to 4.3 V and a peak b located at 3.6 V to 4.0 V.

2. The electrochemical device according to claim 1, **characterized in that**, a peak area of the peak a is Sₐ, and a peak area of the peak b is S_{b}, satisfying: 0.4 ≤ Sₐ/S_{b} ≤ 1.

3. The electrochemical device according to claim 2, **characterized in that**, 0.45 ≤ Sₐ/S_{b} ≤ 0.65.

4. The electrochemical device according to claim 1, **characterized in that**, when the electrochemical device is in a fully discharged state, an X-ray diffraction characterization of the positive electrode plate shows two diffraction peaks in a range of 18° to 19.5°, sequentially from low angle to high angle as diffraction peak A and diffraction peak B, a peak intensity of the diffraction peak A is I_{A}, and a peak intensity of the diffraction peak B is I_{B}, satisfying: 1.2 ≤ I_{B}/I_{A} ≤ 5.

5. The electrochemical device according to claim 4, **characterized in that**, 2 ≤ I_{B}/I_{A} ≤ 5.

6. The electrochemical device according to claim 1, **characterized in that**, the electrochemical device satisfies at least one of the following conditions:
(1) the first positive electrode active material comprises a lithium nickel manganese composite oxide, and the second positive electrode active material comprises a lithium cobalt composite oxide;
(2) the first positive electrode active material is secondary particles formed by aggregation of primary particles;
(3) an average diameter of the first positive electrode active material is 6 µm to 14 µm;
(4) the second positive electrode active material is primary particles;
(5) an average diameter of the second positive electrode active material is 10 µm to 25 µm;
(6) the first positive electrode active material has a layered crystal structure belonging to an R-3m space group; or
(7) the second positive electrode active material has a layered crystal structure belonging to an R-3m space group.

7. The electrochemical device according to claim 1, **characterized in that**, in a cross-section along a thickness direction of the positive electrode active material layer, in a 127 µm × 34 µm region, an area of the first positive electrode active material is S₁, and an area of the second positive electrode active material is S₂, satisfying: 1 ≤ S₂/S₁ ≤ 7.

8. The electrochemical device according to claim 1, **characterized in that**, the electrochemical device satisfies at least one of the following conditions:
(1) the first positive electrode active material further contains element M1, M1 comprises at least one of Na or K, based on metal elements in the first positive electrode active material excluding element Li and the element M1, a molar percentage of the element Ni in the first positive electrode active material is a1, a molar percentage of the element Mn is b1, and a molar percentage of the element M1 is c1, satisfying: 30% ≤ a1 ≤ 70%, 30% ≤ b1 ≤ 70%, and 0.1% ≤ c1 ≤ 15%;
(2) the first positive electrode active material comprises Liₓ₁M1ₘNi_{y1}Mn_{z1}BₖR1_{q1}O_{2±n1}T1ₙ₁, wherein 0.6 ≤ x1 ≤ 1.2, 0.001 ≤ m ≤ 0.15, 0.3 ≤ y1 ≤ 0.7, 0.3 ≤ z1 ≤ 0.7, 0 ≤ k ≤ 0.1, 0 ≤ q1 ≤ 0.2, 0 ≤ n1 ≤ 0.2, element M1 comprises at least one of Na or K, element R1 comprises at least one of Co, Ca, Sr, Y, Zr, Nb, Mo, In, Sn, Sb, Ba, La, Ce, Hf, Ta, W, Pb, Al, Mg, Si, P, S, Ti, V, Cr, Fe, Cu, Zn, Ga, or Ge, and element T1 comprises at least one of F, Cl, Br, I, or N;
(3) based on metal elements in the second positive electrode active material excluding element Li, a molar percentage of the element Co in the second positive electrode active material is a2, satisfying: 80% ≤ a2 ≤ 100%;
(4) the second positive electrode active material further comprises element M2, M2 comprises at least one of Ni, Mn, Al, Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge, and based on metal elements in the second positive electrode active material excluding element Li, a molar percentage of the element M2 in the second positive electrode active material is b2, satisfying: 0.1% ≤ b2 ≤ 20%; or
(5) the second positive electrode active material comprises Liₓ₂Co_{y2}M2_{z2}O_{2±n2}T2ₙ₂, wherein 0.6 ≤ x2 ≤ 1.2, 0.8 ≤ y2 ≤ 1, 0 ≤ z2 ≤ 0.2, 0 ≤ n2 ≤ 0.2, element M2 comprises at least one of Ni, Mn, Al, Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge, and element T2 comprises at least one of F, Cl, Br, I, or N.

9. The electrochemical device according to claim 1, **characterized in that**, the first positive electrode active material comprises a matrix and a coating layer located on a surface of the matrix, the coating layer comprises B, and the electrochemical device satisfies at least one of the following conditions:
(1) the coating layer comprises a B-containing oxide; or
(2) based on metal elements in the first positive electrode active material excluding element Li and element M, a molar percentage of B in the first positive electrode active material is d1, satisfying: 0.5% ≤ d1 ≤ 10%.

10. An electronic device, comprising the electrochemical device according to any one of claims 1 to 9.
